# EUROPÄISCHE PATENTSCHRIFT

(11) **EP 0 724 343 B1**
(45) Veröffentlichungstag und Bekanntmachung des Hinweises auf die Patenterteilung: **09.10.2002**
(21) Anmeldenummer: 96100606.1
(22) Anmeldetag: 17.01.1996
(51) Int. Cl.: H04L 9/32, H04L 9/00, G07C 5/08

(54) **Verfahren zum Nachweis einer Manipulation an zu übertragenen Daten**
Method for indicating manipulation in data that is to be transmitted
Procédé pour la détection de manipulation de données à transmettre

(30) Priorität: 28.01.1995 DE 19502657
(43) Veröffentlichungstag der Anmeldung: 31.07.1996
(73) Patentinhaber: SIEMENS AKTIENGESELLSCHAFT, 80333 München (DE)
(72) Erfinder: Zimmermann, Dieter, Dipl.-Ing. (FH), D-78628 Rottweil (DE)

(56) Entgegenhaltungen:
- EP-A- 0 358 270
- EP-A- 0 547 837
- EP-A- 0 608 651

## Beschreibung

Die Erfindung betrifft ein Verfahren zum Nachweis einer Manipulation an zu übertragenen Daten gemäß dem Oberbegriff des ersten Anspruch.

Aus der Druckschrift EP 358 270 A1 ist ein Verfahren zum Aufzeichnen von zeitbezogenen Daten bekannt, bei dem insbesondere Daten aufgezeichnet werden, welche die Betriebsweise und das Fahren von Fahrzeugen betreffen. Die Aufzeichnung erfolgt unter Verwendung eines Systems, das eine in einem Fahrzeug befestigte Datensammeleinrichtung 1, eine Datenaufzeichnungseinrichtung 16 und eine Datenverarbeitungseinrichtung 10 aufweist, wobei die Datensammeleinrichtung 1 einen Mikroprozessor 2 und die Datenaufzeichnungseinrichtung 16 einen Speicher 18 und einen Zähler 19 enthält und die Datenverarbeitungseinrichtung 10 mit einem Drucker 13 und einer Anzeige 14 ausgestattet ist. Die Datenaufzeichnungseinrichtung 16 soll sowohl mit der Datensammeleinrichtung 1 als auch mit der Datenverarbeitungseinrichtung 10 verbindbar sein. In der Datenaufzeichnungseinrichtung 16 werden Daten unter der Steuerung des Mikroprozessors 2 der Datensammeleinrichtung 1 und unter Hinzufügung von zeitbezogenen Bezugscodes in dem Speicher 18 aufgezeichnet. Die Datenaufzeichnungseinrichtung 16 selbst besitzt keine Rechnerintelligenz.

Bei dem in der EP 358 270 A1 aufgezeigten Verfahren geht es darum, Unklarheiten hinsichtlich der exakten Zeit und/oder der Dauer des Auftretens von aufzuzeichnenden Ereignissen zu vermeiden, die durch nicht miteinander synchronisierte Taktgeneratoren in der Datensammeleinrichtung 1, in der Datenverarbeitungseinrichtung 10 und in der Datenaufzeichnungseinrichtung 16 auftreten können. Die in der EP 358 270 A1 vorliegende Aufgabe wird dadurch gelöst, daß die Bezugscodes vollständig autonom auf der Grundlage einer relativen Zeiteinheit generiert werden, wobei die relative Zeiteinheit und die Bezugscodes nicht durch Mittel außerhalb des Systems einstellbar sind. Nach einer Übertragung der in der Datenaufzeichnungseinrichtung 16 gespeicherten Daten auf die Datenverarbeitungseinrichtung 10 werden aus den mit den Daten gespeicherten Bezugscodes die tatsächlichen uhrzeitbezogenen Zeiten berechnet. Diese Druckschrift zeigt jedoch nicht auf, wie an zu übertragenen Daten an sich der Nachweis einer Manipulation geführt werden kann, sondern beschränkt sich auf eine Lösung, die in einem aus mehreren Komponenten bestehenden System bei den Daten einen möglichst fehlerfreien Zeitbezug herstellt.

Der Gegenstand der vorliegenden Erfindung entspringt jedoch einer anderen Problematik.

In vielen Ländern ist die Überwachung der Einhaltung der Sozialvorschriften für einen Fahrerarbeitsplatz gesetzlich vorgeschrieben. In einer diesem Zweck dienenden im Fahrzeug installierten Einrichtung, die gewöhnlich als Fahrtschreiber ausgebildet ist, werden dazu auf einer Diagrammscheibe aus Papier diverse Daten, insbesondere die Lenkzeiten, Pausenzeiten und Ruhezeiten des Fahrers, aufgezeichnet. Zumeist handschriftlich werden diese Angaben auf der Diagrammscheibe um eine Fahreridentifikation, das amtliche Fahrzeugkennzeichen sowie den km-Stand des Fahrzeugs zu Beginn und am Ende der Schicht ergänzt. Die Praxis hat jedoch zeigt, daß aus unterschiedlichen Interessen heraus diese Aufzeichnungen nur allzuoft manipuliert werden, um damit eine wirkungsvolle, der Verkehrssicherheit dienende Überwachung der Einhaltung der Sozialvorschriften zu vereiteln.

Aus diesem Grund ist vorgeschlagen worden, die erforderlichen Daten elektronisch aufzuzeichnen. Für den Aufschrieb werden zweckmäßigerweise Ereignisse eines Arbeitstages oder eines Fahrauftrages zu einem Datensatz zusammengefaßt. Um die erfaßten Daten einerseits zur Auswertung und zur Archivierung einem Rechner im Büro des Fuhrparks, aber auch zur Überwachung der Einhaltung der Sozialvorschriften den Behördenvertretern, die den auf den Straßen befindlichen Verkehr kontrollieren, zugänglich zu machen, sind zur Übertragung der Daten von dem im Fahrzeug befindlichen Registriergerät an eine weitere Lesestation mobile Speichermedien erforderlich. Zur wirksamen Überprüfung der von einem Fahrer vor dem Kontrollzeitpunkt geleisteten Arbeit sollten die verwendeten Datenträger über die Fähigkeit verfügen, Datensätze über mehrere Tage zu speichern.

Man muß heutzutage jedoch davon ausgehen, daß es den betroffenen Kreisen mit entsprechendem intellektuellen und apparativen Aufwand durchaus möglich ist, auch elektronisch aufgezeichnete Daten zu manipulieren, wenn keine besonderen Schutzvorkehrungen getroffen werden.

Es ist daher die Aufgabe der vorliegenden Erfindung, ein Verfahren aufzuzeigen, das Manipulationen an aufgezeichneten Daten erheblich erschwert und auf möglichst einfache und kostengünstige Weise den Nachweis einer Manipulation führbar macht.

Diese Aufgabe wird durch ein Verfahren mit den Merkmalen des ersten Anspruchs gelöst. Die abhängigen Ansprüche zeigen vorteilhafte Weiterbildungen der gefundenen Lösung.

Intelligente mobile Datenträger sind heute für vielfältige Anwendungen im Einsatz. Dabei kann es sich beispielsweise um elektronische Datenkassetten oder intelligente Datenkarten handeln. Insbesondere wenn der Datenträger als Datenkarte mit integrierten Schaltkreisen in Form eines single-chip-Mikrocontrollers ausgebildet sind, bieten sie bereits durch den architektonischen Aufbau ihres Chips bzw. ihrer Logikeinheit ein hohes Maß an Sicherheit gegen unerlaubte Manipulation. Die einzelnen Funktionseinheiten der Logikeinheit, wie der Mikroprozessor und die verschiedenen Speichereinheiten RAM, ROM und EEPROM, sind dann nämlich monolithisch ausgebildet, so daß es zwischen den einzelnen Funktionseinheiten keine abhörbaren Schnittstellen gibt. Der Aufwand, der betrieben werden müßte, um sich Zugang zu geheimen in der Logikeinheit hinterlegten Daten zu verschaffen, steht bei Chipkarten in einem äußerst ungünstigen Verhältnis zu dem vermeintlichen Nutzen, den eine an einer Manipulation der aufgezeichneten Daten interessierte Person haben kann, weil für derartige Untersuchungen neben umfangreichem technischem Know-how zur Analyse der im µm-Bereich liegenden Schaltungsstrukturen ein Elektronenstrahlmikroskop, das mit einem Rechner und diversen Meßeinrichtungen gekoppelt ist, notwendig wäre. Im übrigen kann ein EEPROM, das zur Speicherung geheimzuhaltender Daten dient, optisch gar nicht analysiert werden. Wenn es auch keine absolute Sicherheit gibt, so bietet eine Chipkarte damit heute doch ein Höchstmaß an Sicherheit vor dem Mißbrauch zu schützender Daten.

Um die zu übertragenden Daten vor mißbräuchlichem Zugriff zu schützen, sind heute verschiedene Sicherheitsmaßnahmen bekannt und zum Teil bereits standardisiert. So bedient man sich diverser Methoden zur Datenverschlüsselung, die entweder den gesamten Inhalt der Daten auf ihrem ganzen Übertragungsweg vor unberechtigten Lesern geheimhalten oder die die unverschlüsselt belassenen Daten zum Zweck der Prüfung ihrer Echtheit mit einem Zusatz versehen. Für die hier zu betrachtende Anwendung ist eine Verheimlichung des gesamten Dateninhalts die in der Praxis schwieriger handhabbare Lösung, da die aufgezeichneten Daten einer größeren Zahl von Personen in ganz unterschiedlichen Situationen ohne Erschwernisse zugänglich sein müssen. So muß sichergestellt sein, daß die aufgezeichneten Daten als solche sowohl im Fuhrpark als auch von Vertretern der Kontrollinstanzen lesbar sind. Deshalb wird hier die Ergänzung der Daten mit einem als Authentifikationsmerkmal wirkenden Zusatz zur Lösung der gestellten Aufgabe im Umfeld eines in einem Fahrzeug Daten erfassenden und Daten von dort zu übertragenden Systems bevorzugt.

Zur Sicherung der Authentizität von Daten ist zB der standardisierte DES-Algorithmus (*D*ata *E*ncrypting *S*tandard) bekannt, der unter Zuhilfenahme eines als zusätzliches Datenwort hinzuzufügenden Schlüssels einen *M*essage *A*uthentification *C*ode (MAC) berechnet. Wer den Schlüssel nicht kennt, kann die übertragenden Daten nicht unbemerkt verändern.

Man unterscheidet dabei zwei Arten der Verschlüsselung. Es gibt Realisierungen mit einem symmetrischen Schlüssel, wie zB beim erwähnten DES-Verfahren, und solche, die einen asymmerischen Schlüssel verwenden. Symmetrische Verschlüsselungsverfahren zeichnen sich dadurch aus, daß die beteiligten Kommunikationspartnern den gleichen geheimen Schlüssel verwenden. Bei der asymmerischen Verschlüsselung gibt es zwei Schlüssel. Jeder Teilnehmer hat einen öffentlichen und einen privaten Schlüssel, wobei aus der Kenntnis des öffentlichen Schlüssels natürlich nicht auf den privaten Schlüssel geschlossen werden kann. Die asymmerische Verschlüsselung erfordert jedoch viel Speicherplatz und bedingt einen hohen Rechenzeitaufwand.

Ein besonderes Schutzbedürfnis besteht somit für den geheimzuhaltenden Schlüssel. Weil die in einem Fahrzeug angebrachte Einrichtung zur elektronischen Erfassung und Aufzeichnung von Daten üblicherweise aus einer Vielzahl diskreter Bauelemente aufgebaut ist, ist hier die Gefahr groß, daß an den Schnittstellen zwischen den einzelnen Funktionseinheiten dieser Einrichtung der Schlüssel abgehört wird. Selbst eine mechanische Plombierung des Gehäuses dieser Einrichtung bietet eine nur sehr begrenzte Sicherheit. Aus Kostengründen verbietet es sich aber, an dieser Stelle der Datenübertragungsstrecke hohen Aufwand zu betreiben, da der Markt druckvoll eher eine Reduktion der Kosten für das im Fahrzeug installierte Registriergerät verlangt.

Erfindungsgemäß wird daher vorgeschlagen, das den Schlüssel bildende Datenwort in dem für Unberechtigte so gut wie unzugänglichen Speicher des mobilen Datenträgers zu hinterlegen, was den Vorteil hat, im Fahrzeuggerät keine zusätzliche Rechnerkapazität vorhalten und auch keine zusätzlichen Sicherheitsmaßnahmen treffen zu müssen. Da bezüglich der erfindungsgemäßen Vorrichtung nicht davon ausgegangen werden darf, daß sich während des Fahrzeugbetriebs der Datenträger im ständigen Zugriff der ersten Daten erfassenden Einrichtung befindet, sondern der Datenträger nur am Ende einer durchaus mehrtägigen Fahrt oder beim Fahrzeugwechsel vorgesteckt werden mag, wird in vorteilhafter Weise in der im Fahrzeug befindlichen Einrichtung erheblicher Rechenaufwand eingespart, wenn die Sicherung der Authentizität der Daten im Datenträger mit einem dort hinterlegten Schlüssel erfolgt, da die Datensicherung dann nur erfolgt, wenn die erfaßten Daten - in für die Auswertung geeigneten Datensätzen zusammengefügt und geordnet - übertragen werden. Zwischenzeitliche Datensicherungen, die den Rechner der Datenerfassungseinrichtung sonst in nicht unerheblicher Weise belasten, entfallen durch die erfindungsgemäße Verlagerung von Funktionen von der ersten Einrichtung in einen entsprechenden intelligenten mobilen Datenträger.

Der Schlüssel wird vorzugsweise von der den Datenträger ausgebenden Stelle im Datenträger implementiert, wobei diese Stelle natürlich nicht mit dem Anwender, insbesondere nicht mit dem Fuhrunternehmen, identisch sein darf, sondern eine neutrale Stelle ohne jeglichen Manipulationsinteresse an den gespeicherten Daten sein muß, zB eine Behörde, die Datenträger dieser Art verwaltet. Mit der Ausgabe des Datenträgers bzw. dessen Initialisierung wird dieser in der Regel auch personalisiert, dh seinem Benutzer zugeordnet.

Es bietet sich auch der Vorteil, daß der Schlüssel für künftig hergestellte Datenträger wertmäßig anders als bei früheren Herstellosen gewählt und im Bedarfsfall sogar individualisiert werden kann. Damit wird eine weitere Sicherheitsbarriere errichtet. Denn selbst wenn es gelänge, einmal den Schlüssel in Erfahrung zu bringen, eröffnet sich damit eventuell ein territorial oder zeitlich nur sehr begrenzter Zugriff auf die Schlüsselinformation, die jedoch bei einer Manipulation der Daten mitverändert werden müßte, um die Echtheit der veränderten Daten vortäuschen zu können.

Die Erfindung geht davon aus, daß das größte Manipulationsinteresse im Aufzeichnungsteil der Datenübertragungsstrecke besteht. Da in der Regel Personengleichheit zwischen dem Besitzer der ersten im Fahrzeug befindlichen, Daten erfassenden Einrichtung und der zweiten, die gespeicherten Daten auswertenden Einrichtung besteht, ist jede Lösung, die bezüglich der Datensicherung einen durchgängigen Datenkanal von der ersten zur zweiten Einrichtung vorsieht, nachteilig gegenüber der erfindungsgemäßen Lösung. Würde ein Schlüssel zur Datensicherung in der ersten Einrichtung hinterlegt, müßte ein kostenmäßig nicht mehr tragbarer Aufwand getrieben werden, um über die Einsatzdauer dieser im Fahrzeug befindlichen Einrichtung, was 10 Jahre oder sogar auch bedeutend länger sein kann, die Geheimhaltung des Schlüssels zu gewährleisten. Deshalb sieht die hier vorgeschlagene Lösung vor, den geheimen Schlüssel dort zu hinterlegen, wo er nach heutigem Ermessen am sichersten aufbewahrt ist.

Der Datenerfassungsteil war und ist natürlich auch Angriffspunkt für vielfältige Manipulationen, jedoch sind dafür bereits Schutzvorkehrungen entwickelt worden, die nicht Bestandteil dieser Erfindung sind und daher hier auch nicht näher betrachtet werden.

Gelangen die im Fahrzeug erfaßten Daten über die im Fahrzeug installierte Kommunikationsschnittstelle unverfälscht auf den mobilen Datenträger, ist mit der erfindungsgemäßen Lösung jede spätere Manipulation auf einfache Weise nachweisbar. Es ist nicht die Aufgabe der vorliegenden Erfindung, Unberechtigten das Auslesen der Daten grundsätzlich unmöglich zu machen, sondern sie besteht darin, eine Lösung zur Prüfung der Echtheit der Daten zu bieten. Die Daten selbst werden deshalb entlang ihrer Übertragungsstrecke nicht chiffriert, sondern unverschlüsselt von der ersten Einrichtung über den Datenträger auf jede weitere dafür vorgesehene Einrichtung übertragen. Damit kann jeder auch ohne Kenntnis des im Datenträger hinterlegten Schlüssels die gespeicherten Daten auslesen und auswerten.

Die Echtheit der Daten wird dadurch nachgewiesen, daß aus den Daten, die von der ersten im Fahrzeug befindlichen Einrichtung auf den mobilen Datenträger übertragen werden, im Datenträger unter Zuhilfenahme eines Verschlüsselungsverfahrens und eines im Datenträger vor unberechtigtem Zugriff geschützt hinterlegten Schlüssels vom Mikroprozessor des Datenträgers eine kryptografische Prüfsumme berechnet wird, die dem übertragenen Datensatz als Authentifikationsmerkmal derart hinzufügt wird, daß dieses Merkmal bei jeder nachfolgenden Übertragung der Daten an eine weitere, zweite Einrichtung zwangsweise mitübertragen wird, so daß im weiteren Datenfluß durch nochmalige gleichartige Berechnung der kryptografischen Prüfsumme und durch einen Vergleich mit dem Wert der ersten Prüfsumme eine spätere Manipulation an dem ursprünglich von der ersten Einrichtung zum Datenträger übertragenen Datensatz nachweisbar ist. Diese Echtheitsprüfung kann von jeder Person durchgeführt werden, die dazu dadurch authorisiert ist, daß sie über ein Kontrollmittel verfügt, das als ein den Schlüssel beinhaltender Datenträger ausgebildet sein kann.

Vorteilhafte Weiterbildungen der gefundenen Vorrichtung sehen vor, daß der zur Datenübertragung verwendete Datenträger mit Mitteln ausgestattet ist, die vor dem Empfang von Daten, die von der ersten Einrichtung gesendet werden, die Berechtigung zur Kommunikation des Datenträgers mit der ersten Einrichtung prüfen und nur beim Vorliegen der Kommunikationberechtigung aus den von der ersten Einrichtung übertragenen Daten eine kryptografische Prüfsumme bilden. Die Berechtigung zur Kommunikation des Datenträgers mit der ersten Einrichtung kann beispielsweise durch ein gegebenenfalls sogar individuelles Paßwort nachgewiesen werden, wobei das Paßwort bei der Initialisierung des Fahrzeuggerätes durch selbsttätige Übertragung von einem nur authorisiertem Personal zugänglichen Datenträger eingegeben wird, nachdem dieser Datenträger über die Kommunikationsschnittstelle der ersten Einrichtung mit dieser Einrichtung in Kontakt getreten ist. Dieser zur Initialisierung des Registriergerätes im Fahrzeug erforderliche Datenträger kann als Werkstattkarte ebenfalls in Form einer intelligenten Chipkarte ausgebildet sein. Mit dem Paßwort können die Schreibrechte in den zur Datenübertragung verwendeten Datenträger eingeschränkt werden.

Wie erwähnt, ist es sehr vorteilhaft, den Datenträger als intelligente Chipkarte mit einem in einem einzigen Chip gefertigten Mikrocontroller bestehend aus dem eigentlichen Prozessor und den erforderlichen Speichereinheiten auszubilden. Die in einem Fahrzeug angebrachte erste Einrichtung zur elektronischen Erfassung und Aufzeichnung von Daten wird in der Praxis in den meisten Fällen als Fahrtschreiber mit einer Schnittstelle zur Kommunikation mit den Datenträgern ausgebildet sein.

Um die erforderliche Rechenleistung möglichst gering zu halten und aus Gründen der Verschlüsselungsgeschwindigkeit ist es vorteilhaft, zur Bildung der Prüfsumme ein symmetrisches Verschlüsselungsverfahren anzuwenden. In der Kryptografie bekannte asymmetrische Verschlüsselungsverfahren bedingen einen ungleich höheren Rechenaufwand und bieten für die hier in Rede stehende Anwendung keine zusätzlichen Vorteile.

Chipkarten sind durch den täglichen Gebrauch dem Verschleiß unterworfen und haben damit nur eine begrenzte Haltbarkeit. Sie müssen daher nach einer gewissen Zeit ersetzt werden. Zur Erhöhung der Sicherheit kann man beispielsweise in Anlehnung an den Rhythmus der sowieso erforderlichen Kartenerneuerung in der ersten Einrichtung oder in dem Datenträger, auf den die Daten aus der ersten Einrichtung übertragen werden, Zeitzählmittel vorsehen, die dem Paßwort nur eine zeitlich begrenzte Gültigkeit zuordnen.

Wie erwähnt, können alle über einen Arbeitstag oder Fahrauftrag registrierten Daten einen einzigen Datensatz bilden. Es ist vorteilhaft, die Prüfsumme nicht ständig, sondern nur bei Bedarf, zB erst beim Tagesabschluß oder bei Beendigung des Auftrages, aus dem zuletzt aufgezeichneten Datensatz zu berechnen. Insbesondere bei Ausgestaltungen der Vorrichtung, bei denen die Datenkarte nicht ständig, sondern nur zeitweise mit der Kommunikationsschnittstelle des Fahrzeuggerätes in Kontakt steht, wird diese Option zur Anwendung kommen, bei der nur nach Abschluß der vollständigen Übertragung eines oder mehrerer in sich abgeschlossener Datensätze die Prüfsumme berechnet wird. Auch der Beginn eines neuen Datensatzes kann automatisch die Berechnung der Prüfsumme über die zuletzt eingelesenen Daten veranlassen, sofern die Datenkarte zu diesem Zeitpunkt gesteckt ist. Es ist auch sehr zu empfehlen, die einzelnen Datensätze fortlaufend zu numerieren, um auszuschließen, daß komplette Datensätze unbemerkt gelöscht werden können.

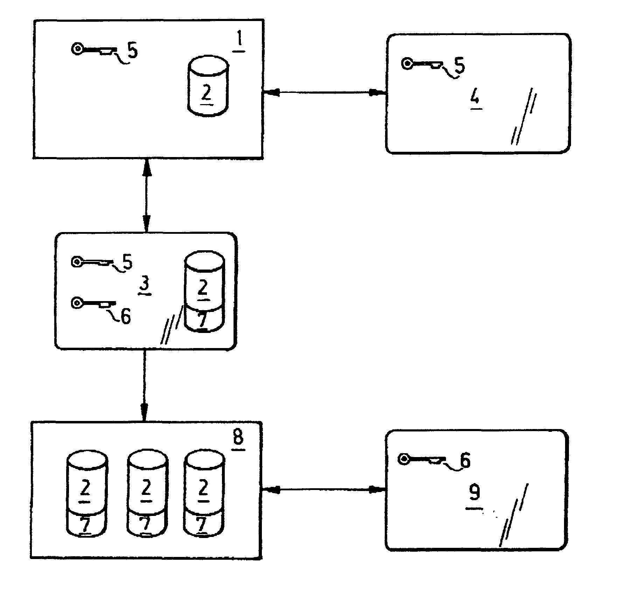

Anhand der Figur soll die vorgeschlagene mehrkomponentige Vorrichtung nochmals kurz erläutert werden. Im Fahrzeug ist eine erste Einrichtung 1 installiert, die die Arbeitszeit eines Fahrers elektronisch registriert. Diese aufgezeichneten Daten 2 werden von dort über eine Kommunikationsschnittstelle der ersten Einrichtung auf einen mobilen Datenträger 3, vorzugsweise eine intelligente Chipkarte, übertragen. Die nicht näher dargestellte Kommunikationsschnittstelle kann an einer geeignet ausgebildeten Schreib-/Leseeinrichtung die Daten in die Chipkarte beispielsweise über elektrische Kontakte oder induktiv einkoppeln.

Die besagte erste Einrichtung 1 wird häufig als Fahrtschreiber ausgebildet sein. Bei seinem festen Einbau in ein Fahrzeug wird er an die in diesem Fahrzeug installierten Fahrzeugdatenerfassungseinrichtungen, wie zB die Erfassungseinrichtungen von Weg und Geschwindigkeit, angepaßt. Bei dieser Initialisierung können auch Anweisungen für die Arbeitszeiterfassung eingegeben werden. Mittels eines vorzugsweise ebenfalls als Chipkarte ausgebildeten Datenträgers 4, der als Werkstattkarte bezeichnet wird, können Angaben wie die aktuelle Uhrzeiteinstellung, Umschaltzeitpunkte für die Sommer- und Winterzeit, eine Kenn-Nummer für die die Initialisierung durchführende Werkstatt, was in der Regel nur eine besonders authorisierte Fachwerkstatt sein wird, aber insbesondere auch ein Paßwort 5, das die Kommunikation zwischen dem Fahrtschreiber 1 und dem Datenträger 3 regelt, über die Kommunikationsschnittstelle in den Fahrtschreiber eingegeben werden. Es mag aus Sicherheitsgründen von Vorteil sein, die Gültigkeit des Paßwortes zeitlich zu limitieren und in gewissen Zeitabständen zu erneuern. Das in der Werkstattkarte 4 hinterlegte Paßwort 5 kann über einen Rechner automatisch vergeben werden und braucht niemandem bekannt gegeben zu werden. Auch die Schreibrechte der Werkstattkarte 4 bezüglich der ersten Einrichtung 1 können durch geeignete Schutzmechanismen nochmals separat abgesichert sein.

Wird nun der Datenträger 3, der auch als Fahrerkarte bezeichnet wird, in die Kommunikationsschnittstelle der ersten Einrichtung 1 zur Übertragung der in der ersten Einrichtung aufgezeichneten Daten 2 gesteckt, nimmt diese erste Einrichtung 1 die Kommunikation mit dem Datenträger 3 dadurch auf, das sie zunächst das Paßwort 5 abfragt, das auch im Datenträger 3 hinterlegt sein muß. Stimmen die Paßwörter überein, erlaubt der Datenträger 3 dem Fahrtschreiber 1, seine Daten 2 auf den Datenträger 3 zu übertragen.

In der Fahrerkarte 3 werden die empfangenen, einen unverschlüsselten Datensatz bildenden Daten 2 einem Verschlüsselungsverfahren, vorzugsweise dem DES-Algorithmus, unter Zuhilfenahme eines geheimen, in der Fahrerkarte 3 als Datenwort hinterlegten Schlüssels 6 unterzogen, um ein Authentifikationsmerkmal 7 zu berechnen, das dem Datensatz hinzugefügt und fortan bei jeder weiteren Übertragung des Datensatzes als Zusatz zu diesem Datensatz weitergegeben wird. Das Authentifikationsmerkmal 7 wird als kryptografische Prüfsumme aus den übertragenen Daten gebildet.

In gewissen Zeitabständen innerhalb des maximal speicherbaren Zeitraums legt der Fahrer seine Fahrerkarte 3 im Büro des Fuhrparks vor, damit die gespeicherten Datensätze ausgelesen, ausgewertet und archiviert werden können. Das Auslesen der mit dem Authentifikationsmerkmal 7 versehenen Datensätze erfolgt mit einer weiteren, zweiten Einrichtung 8, die ebenso wie die erste Einrichtung 1 über eine geeignete, hier aber nicht näher beschriebene Kommunikationsschnittstelle verfügen muß. Diese zweite Einrichtung 8 muß jedoch nicht in jedem Fall ein Fuhrparkrechner sein. Es kann auch eine Lesestation von Kontrollbehörden sein, die die Einhaltung der Sozialvorschriften überprüfen.

Zur Durchführung der Prüfung der Echtheit der Daten wird in die zweite Einrichtung 8 ein vorzugsweise ebenfalls als Chipkarte ausgebildeter Datenträger 9 vorgesteckt, der auch den in der Fahrerkarte 3 hinterlegten geheimen Schlüssel 6 enthält. Die zu prüfenden Datensätze werden erneut einem Verschlüsselungsverfahren, das dem ersten Algorithmus entspricht, unter Zuhilfenahme des geheimen Schlüssels 6 unterzogen. Das auf diese Weise aus den zu prüfenden Datensätzen neu gewonnene Authentifikationsmerkmal wird mit dem Wert aus der ersten Berechnung verglichen. Bei Gleichheit der Werte sind die vorliegenden Datensätze unverfälscht. Die Ungleichheit der Werte des Authentifikationsmerkmals beweist eine Veränderung der Daten.

Auch der Zugriff mit der Kontrollkarte 9 auf die in der zweiten Einrichtung 8 gespeicherten Daten kann bei Bedarf durch geeignete Schutzmaßnahmen, zB durch eine *P*ersonal *I*dentification *N*umber (PIN), geschützt sein, so daß eine bidirektionale Kommunikation auch zwischen der Kontrollkarte 9 und der zweiten Einrichtung 8 erfolgt.

Die hier vorgeschlagene Lösung zur Schaffung einer Vorrichtung, die in einer ersten Einrichtung 1 in einem Fahrzeug Daten 2 elektronisch erfaßt und diese Daten 2 von dort mit einem intelligenten mobilen Datenträger 3 in eine zweite Einrichtung 8 außerhalb des Fahrzeugs derart überträgt, daß Manipulationen an den aufgezeichneten Daten 2 erheblich erschwert sind und der Nachweis einer Manipulation an den übertragenen Daten 2 führbar ist, ist tatsächlich auf einfache und kostengünstige Weise realisierbar.

## Patentansprüche

1. Verfahren zum Nachweis einer Manipulation an Daten (2), die von einer in einem Fahrzeug installierten ersten Einrichtung (1) unter Verwendung eines intelligenten mobilen Datenträgers (3) auf wenigstens eine weitere zweite Einrichtung (8) zu übertragen sind, wobei die erste Einrichtung (1) und die zweite Einrichtung (8) jeweils über eine Schnittstelle zur Kommunikation mit dem Datenträger (3) verfügen,
**gekennzeichnet durch folgende Verfahrensschritte:**
a) Nach dem Einbringen des Datenträgers (3) in die Kommunikationsschnittstelle der ersten Einrichtung (1) wird die Legitimation des Datenträgers (3) zur Teilnahme an der Datenübertragung unter Verwendung eines sowohl in der ersten Einrichtung (1) als auch im Datenträger (3) hinterlegten Paßwortes (5) geprüft.
b) Bei einem positiven Prüfungsergebnis erlaubt der Datenträger (3) der ersten Einrichtung (1), in der ersten Einrichtung (1) hinterlegte Daten (2) auf den Datenträger (3) zu übertragen.
c) Die erste Einrichtung (1) fordert dann den Datenträger (3) auf, ein Authentifikationsmerkmal (7) aus den übertragenen Daten (2) unter Zuhilfenahme eines im Datenträger (3) hinterlegten geheimen Schlüssels (6) zu berechnen, dieses Authentifikationsmerkmal (7) den zu übertragenen Daten (2) hinzuzufügen und die derart um das Authentifikationsmerkmal (7) ergänzten Daten (2) im Datenträger (3) zu speichern, woraufhin der Datenträger (3) aus der Kommunikationsschnittstelle der ersten Einrichtung (1) entnommen werden kann.
d) Nach dem Einbringen des Datenträgers (3) in die Kommunikationsschnittstelle der zweiten Einrichtung (8) fordert die zweite Einrichtung (8) vom Datenträger (3) die um das Authentifikationsmerkmal (7) ergänzten Daten (2) an, die daraufhin vom Datenträger (3) an die zweite Einrichtung (8) zur dortigen Auswertung gesendet werden, wobei das Authentifikationsmerkmal (7) eine spätere mit der zweiten Einrichtung (8) durchgeführte Manipulation an den ursprünglich von der ersten Einrichtung (1) stammenden und mit dem Datenträger (3) übertragenen Daten (2) nachweisbar macht.

2. Verfahren nach Anspruch 1, **dadurch gekennzeichnet, daß** zur Bildung des Authentifikationsmerkmals (7) ein symmetrisches Verschlüsselungsverfahren angewendet wird.

3. Verfahren nach Anspruch 1 oder 2, **dadurch gekennzeichnet, daß** das Paßwort (5) von einem nur authorisiertem Personal zugänglichen Datenträger (4) nach dessen Einbringung in die Kommunikationsschnittstelle der ersten Einrichtung (1) selbsttätig an die erste Einrichtung (1) übertragen wird.

4. Verfahren nach einem der Ansprüche 1 bis 3, **dadurch gekennzeichnet, daß** das Authentifikationsmerkmal (7) nicht kontinuierlich bei jeder Übertragung von Daten (2) berechnet wird, sondern nur bedarfsweise.

5. Verfahren nach einem der Ansprüche 1 bis 4, **dadurch gekennzeichnet, daß** die übertragenen Daten (2) entsprechend ihrem inhaltlichen Zusammenhang zu Datensätzen zusammengefaßt und diese Datensätze fortlaufend numeriert werden.

6. Verfahren nach einem der Ansprüche 1 bis 5, **dadurch gekennzeichnet, daß** der Nachweis einer Manipulation an Daten (2), die von der ersten Einrichtung (1) unter Verwendung des Datenträgers (3) auf eine zweite Einrichtung (8) übertragen wurden, dadurch erfolgt, daß ein der Kontrolle dienender Datenträger (9), in dem derselbe Schlüssel (6) hinterlegt ist wie auf dem der Übertragung der Daten (2) dienenden Datenträger (3), in die Kommunikationsschnittstelle der zweiten Einrichtung (8) eingebracht wird, woraufhin mit dem Schlüssel (6), der in dem der Kontrolle dienenden Datenträger (9) hinterlegt ist, erneut auf gleiche Weise wie in dem der Übertragung der Daten (2) dienenden Datenträger (3) aus den Daten (2) das Authentifikationsmerkmal (7) berechnet und dieses Authentifikationsmerkmal (7) mit dem Authentifikationsmerkmal (7) aus der ersten Berechnung verglichen wird, wobei eine Manipulation an den in die zweite Einrichtung (8) übertragenen Daten (2) daran erkannt wird, wenn beide Ergebnisse nicht gleich sind.

## Claims

1. Method for detection of manipulation of data (2) to be transferred with the use of an intelligent mobile data storage medium (3) from a first device (1) installed in a vehicle to at least one other second device (8), the first device (1) and the second device (8) each having an interface for communicating with the data storage medium (3),
**characterized in that**
a) After introducing the data storage medium (3) into the communications interface of the first device (1), the authorization of the data storage medium (3) to participate in the data transfer is checked using a password (5) stored in both the first device (1) and the data storage medium (3).
b) Where the result of the check is positive, the data storage medium (3) allows the first device (1) to transfer data (2) stored in the first device (1) to the data storage medium (3).
c) The first device (1) then asks the data storage medium (3) to calculate an authentication feature (7) from the transferred data (2) using a secret key (6) stored in the data storage medium (3), to add this authentication feature (7) to the to transferred [sic] data (2), and to save in the data storage medium (3) the data (2) supplemented in this way by the authentication feature (7), whereupon the data storage medium (3) can be removed from the communications interface of the first device (1).
d) After introducing the data storage medium (3) into the communications interface of the second device (8), the second device (8) requests from the data storage medium (3) the data (2) supplemented by the authentication feature (7), which as a result is sent from the data storage medium (3) to the second device (8) for analysis there, the authentication feature (7) making it possible to detect a subsequent manipulation, performed using the second device (8), of the data (2) originating from the first device (1) and transferred using the data storage medium (3).

2. Method according to Claim 1, **characterized in that** a symmetrical encryption technique is used for constructing the authentication feature (7).

3. Method according to Claim 1 or 2, **characterized in that** the password (5) is transferred automatically to the first device (1) from a data storage medium (4), accessible only to authorized staff, after this data storage medium is introduced into the communications interface of the first device (1).

4. Method according to one of Claims 1 to 3, **characterized in that** the authentication feature (7) is not calculated continuously with every transfer of data (2), but only as needed.

5. Method according to one of Claims 1 to 4, **characterized in that** the transferred data (2) is combined into data records of related content, and these data records are numbered consecutively.

6. Method according to one of Claims 1 to 5, **characterized in that** manipulation of data (2), transferred with the use of the data storage medium (3) from the first device (1) to a second device (8), is detected by inserting in the communications interface of the second device (8) a data storage medium (9), used for inspection purposes and which holds the same key (6) as is stored on the data storage medium (3) used for transfer of the data (2), whereupon the authentication feature (7) is calculated again from the data (2) using the key (6) stored in the data storage medium (9), used for inspection purposes, in the same way as in the data storage medium (3), used for transfer of the data (2), and this authentication feature (7) is compared with the authentication feature (7) from the first calculation, manipulation of the data (2) transferred to the second device (8) then being detected if the two results are not equal.

## Revendications

1. Procédé pour la mise en évidence d'une manipulation faite sur des données (2) qui sont transférées d'un premier dispositif (1) installé dans un véhicule, par l'utilisation d'un support de données mobile intelligent (3), à au moins un second dispositif (8), le premier dispositif (1) et le second dispositif (8) disposant respectivement d'une interface pour la communication avec le support de données (3)
**caractérisé par** les phases de procédé suivantes :
a) Après la mise en place du support de données (3) dans l'interface de communication du premier dispositif (1), la légitimation du support de données (3) pour la participation au transfert de données avec utilisation d'un mot de passe (5) stocké aussi bien dans le premier dispositif (1) que dans le support de données (3), sera contrôlée.
b) En cas de résultat positif du contrôle, le support de données (3) du premier dispositif (1) permet de transférer des données (2) stockées dans ledit premier dispositif (1) audit support de données (3).
c) Le premier dispositif (1) demande alors au support de données (3) de calculer, à partir des données (2) transférées, avec l'aide d'un code secret (6) stocké dans un support de données (3), une caractéristique d'authentification (7), d'ajouter ladite caractéristique d'authentification (7) aux données (2) à transférer et de mémoriser les données (2) complétées ainsi par la caractéristique d'authentification (7) dans le support de données (3), ledit support de données (3) pouvant ainsi être retiré de l'interface de communication du premier dispositif (1).
d) Après la mise en place du support de données (3) dans l'interface de communication du second dispositif (8), le second dispositif (8) réclame au support de données (3) les données (2) complétées par la caractéristique d'authentification (7) qui seront ensuite transmises du support de données (3) au second dispositif (8) pour y être exploitées, ladite caractéristique d'authentification (7) pouvant mettre en évidence une manipulation ultérieure effectuée avec le second dispositif (8) sur les données (2) provenant originairement du premier dispositif (1) et transmises avec le support de données (3).

2. Procédé selon la revendication 1,
**caractérisé par le fait**
**que** pour la formation de la caractéristique d'authentification (7) est utilisé un procédé de codage symétrique.

3. Procédé selon l'une quelconque des revendications 1 ou 2,
**caractérisé par le fait**
**que** le mot de passe (5) sera automatiquement transféré au premier dispositif (1) par un support de données (4) uniquement accessible à un personnel autorisé après la mise en place de ce dernier dans l'interface de communication du premier dispositif (1).

4. Procédé selon l'une quelconque des revendications 1 à 3,
**caractérisé par le fait**
**que** la caractéristique d'authentification (7) ne sera pas calculé continûment à chaque transfert de données (2) mais seulement en cas de besoin.

5. Procédé selon l'une quelconque des revendications 1 à 4,
**caractérisé par le fait**
**que** les données (2) transférées seront regroupées selon leur contexte en des jeux de données et que lesdits jeux de données seront numérotés en continu.

6. Procédé selon l'une quelconque des revendications 1 à 5,
**caractérisé par le fait**
**que** la mise en évidence d'une manipulation faite sur des données (2) qui ont été transférées du premier dispositif (1) avec utilisation du support de données (3) à un second dispositif (8) sera effectuée par le fait qu'un support de données (9) servant au contrôle et dans lequel est déposé le même code (6) que dans le support de données (3) servant au transfert des données (2), sera mis en place dans l'interface de communication du second dispositif (8), le code (6), qui est déposé dans le support de données (9) servant au contrôle, étant destiné à calculer une nouvelle fois, de la même manière que dans le support de données (3) servant au transfert des données (2), à partir de ces données (2), la caractéristique d'authentification (7) et à comparer ladite caractéristique d'authentification (7) avec la caractéristique d'authentification (7) émanant du premier calcul, une manipulation commise aux données (2) transférées au second dispositif (8 étant détectée lorsque les deux résultats ne sont pas identiques.
